# EUROPÄISCHE PATENTSCHRIFT

(11) **EP 2 702 856 B1**
(45) Veröffentlichungstag und Bekanntmachung des Hinweises auf die Patenterteilung: **19.08.2015**
(21) Anmeldenummer: 13003195.8
(22) Anmeldetag: 21.06.2013
(51) Int. Cl.: A01D 43/063

(54) **Aufsitzmäher**
Lawn tractor
Tondeuse autoportée

(30) Priorität: 31.08.2012 DE 102012017350
(43) Veröffentlichungstag der Anmeldung: 05.03.2014
(73) Patentinhaber: MTD PRODUCTS INC., Valley City, Ohio 44280 (US)
(72) Erfinder: Musmann, Horst, 66130 Brebach (DE); Krumm, Alexander, 57520 Grosbliederstroff (FR)
(74) Vertreter: Feldkamp, Rainer

(56) Entgegenhaltungen:
- DE-U1-202006 016 051
- JP-A- 2004 329 115
- US-A- 3 934 392
- US-A- 4 168 600

## Beschreibung

Die Erfindung bezieht sich auf einen Aufsitzmäher nach dem Oberbegriff des Anspruchs 1.

Derartige Aufsitzmäher weisen ein auf Rädern abrollendes Fahrgestell, eine Antriebseinrichtung, ein Mähwerk und einen am Heck des Aufsitzmähers angeordneten Grasfangbehälter auf, der mit dem Mähwerk über einen Auswurfkanal verbunden ist, der eine durch eine Verschlusseinrichtung verschließbarer Auswurföffnung für Verstopfungen aufweist.

Derartige Aufsitzmäher sind beispielsweise aus der DE 20 2006 016 051 U1 bekannt. Bei diesem bekannten Aufsitzmäher ist in dem das Mähwerk mit einem Fangkorb verbindenden Mähwerkschacht eine Klappe angeordnet, die zwischen einer den Mähwerkschacht verschließenden Verschlussstellung und einer mindestens einen Teil der Schachtwandung bildenden Offenstellung verstellbar ist, wobei die Klappe in der Offenstellung zumindest einen Teil der unteren Schachtwandung bildet und mit ihrem in Transportrichtung betrachtet hinteren Ende schräg aufwärts gerichtet ist. Eine Beseitigung von Verstopfungen wird durch diese Klappe jedoch nicht ermöglicht.

Aus der JP 2004329115 A ist ein Aufsitzmäher der eingangs genannten Art ist bekannt, bei dem die Auswurföffnung des Auswurfkanals im Normalbetrieb durch eine Klappe verschlossen wird, die beim Auftreten von Verstopfungen geöffnet werden kann. Am Auswurfkanal anhaftendes Mähgut kann hierbei jedoch nicht entfernt werden, so dass selbst bei einem Öffnen der Auswurfklappe keine vollständige Reinigung des Auswurfkanals möglich ist.

Der Erfindung liegt die Aufgabe zugrunde, einen Aufsitzmäher der eingangs genannten Art zu schaffen, der eine einfache und zuverlässige Beseitigung von Verstopfungen des Auswurfkanals ermöglicht.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung des Auswurfkanals mit gegeneinander verschiebbaren Ober- und Unterteilen ergibt sich bei der Verschiebung des Unterteils in Richtung auf den Grasfangbehälter eine Art von Scherwirkung auf das den Auswurfkanal verstopfende Material, so dass dieses Material von der Oberfläche des Auswurfkanals abgestreift wird und aus der durch die Verschiebung des Unterteils des Auswurfkanals gegenüber dessen Oberteil gebildete Öffnung benachbart zu dem Mähwerk herausfallen kann, wobei dieser Vorgang durch die Betätigung des Mähwerkes unterstützt werden kann. Ein Teil des Materials fällt weiterhin bei der Zurückbewegung des Unterteils in den Grasfangbehälter.

Gemäß einer vorteilhaften Ausgestaltung der Erfindung sind der Unterteil und der Oberteil des Auswurfkanals über ineinander greifende Führungseinrichtungen verbunden, so dass der Unterteil des Auswurfkanals an dem Oberteil des Auswurfkanals verschiebbar geführt ist.

Gemäß einer bevorzugten Ausgestaltung der Erfindung weist das Fahrgestell des Aufsitzmähers an seinem hinteren Ende eine Befestigungsplatte zur Befestigung des Grasfangbehälters auf, wobei die Befestigungsplatte eine Öffnung aufweist, in deren oberen Bereich das von dem Mähwerk abgewandte hintere Ende des Auswurfkanals mündet, wobei der zumindest teilweise in den Grasfangbehälter verschiebbare Unterteil des Auswurfkanals eine Bodenwand aufweist, die durch eine sich nach unten erstreckende Verschlussplatte verlängert ist, die im Betriebszustand des Aufsitzmähers den unteren Bereich der Öffnung der Befestigungsplatte verschließt und derart ausgebildet ist, dass sie bei einer Verschiebung des Unterteils in den Grasfangbehälter in dem Grasfangbehälter befindliches Material zurückdrückt und den unteren Teil der Öffnung freigibt.

Diese Verschlussplatte kann weiterhin in vorteilhafter Weise zur Reinigung von einem an der Unterkante der Öffnung der Befestigungsplatte angeordneten Füllstandssensor von daran angesammelten Mähgut-Resten dienen, während diese Verschlussplatte von der Verschlussstellung in die geöffnete Stellung bei der Bewegung des Unterteils des Auswurfkanals bewegt wird.

Der Querschnitt des Auswurfkanals nimmt vorzugsweise vom Mähwerk zum Grasfangbehälter hin ab.

Gemäß einer bevorzugten Ausgestaltung der Erfindung ist hierbei vorgesehen, dass die Bodenwand des Unterteils des Auswurfkanals in einem dem Grasfangbehälter benachbarten Bereich einen nach unten hin abgebogenen Abschnitt aufweist, so dass sich ausgehend von dem Mähwerk zum Grasfangbehälter hin zunächst eine Querschnittsverringerung und nachfolgend eine Querschnittserweiterung des Auswurfkanals ergibt. Auf diese Weise wird bei einer Bewegung des Unterteils des Auswurfkanals in den Grasfangbehälter hinein das in dem Auswurfkanal angesammelte Mähgut zunächst komprimiert und dann bei einer Rückwärtsbewegung des Unterteils in Richtung auf das Mähwerk wieder freigegeben, so dass es leicht aus dem Auswurfkanal zurück zum Mähwerk fallen kann und entweder aus der noch vorhandenen Öffnung herausfällt oder durch den von dem Mähwerk im Betrieb erzeugten Luftstrom in den Grasfangbehälter geblasen wird.

Am Mähwerk sind vorzugsweise an eine Druck-Wasserquelle anschließbare Waschdüsen zur Reinigung angebracht, die neben der Reinigung des Mähwerks auch eine Reinigung des Auswurfkanals bewirken können, während sich das Mähwerk dreht. Diese Reinigungswirkung kann dadurch unterstützt werden, dass der Unterteil des Auswurfkanals hin und her bewegt wird und hierbei abwechselnd zwischen seinem dem Mähwerk benachbarten Ende und dem Mähwerk selbst eine erhebliche Öffnung freigibt, durch die im Auswurfkanal befindliches Mähgut ausgeschwemmt werden kann.

Die Erfindung wird im Folgenden anhand von in der Zeichnung dargestellten Ausführungsbeispielen noch näher erläutert.

In der Zeichnung zeigen:
Figur 1 eine Ansicht einer Ausführungsform des Aufsitzmähers;
Figur 2 eine weggebrochen dargestellte Querschnittsansicht des Aufsitzmähers in einer ersten Betriebsstellung des Unterteils des Auswurfkanals;
Figur 3 eine der Figur 2 entsprechende Darstellung der Ausführungsform des Aufsitzmähers in einer zweiten Betriebsstellung des Unterteils des Auswurfkanals;
Figur 4 eine Rückansicht des Innenaufbaus der Ausführungsform des Aufsitzmähers in der ersten Betriebsstellung des Unterteils des Auswurfkanals;
Figur 5 eine der Figur 4 entsprechende Darstellung des Aufsitzmähers in der zweiten Betriebsstellung des Unterteils des Auswurfkanals;
Figur 6 eine auseinander gezogene Ansicht des Auswurfkanals und eines Teils des Fahrgestells der Ausführungsform des Aufsitzmähers;
Figur 7 eine Darstellung einer abgeänderten Ausführungsform des in den Figuren 2 und 3 gezeigten Teils des Aufsitzmähers in der ersten Betriebsstellung des Unterteils des Auswurfkanals;
Figur 8 eine der Figur 7 entsprechenden Darstellung der Ausführungsform des Aufsitzmähers in der zweiten Betriebsstellung des Unterteils des Auswurfkanals;
Figur 9 eine Darstellung zur Erläuterung der Wirkungsweise der Betätigung des Aufsitzmähers in der ersten und der zweiten Betriebsstellung des Unterteils des Auswurfkanals.

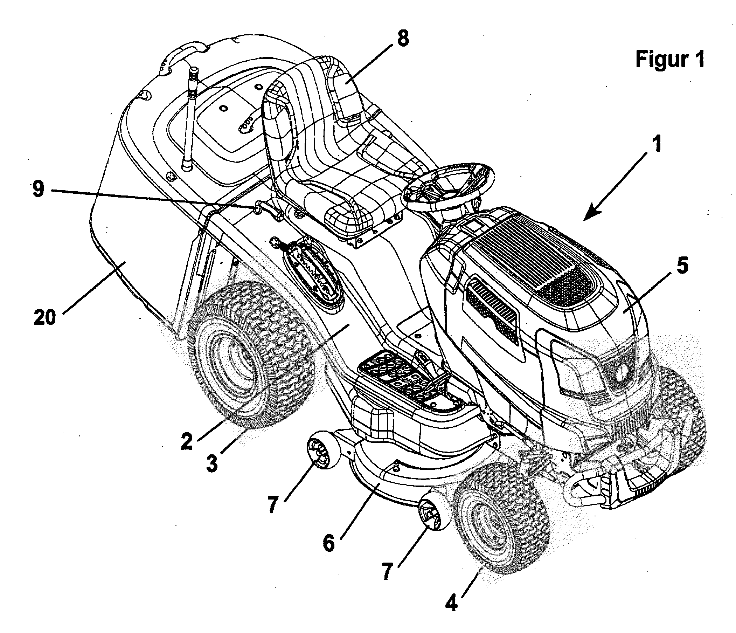

In Figur 1 ist eine Ansicht einer Ausführungsform eines Aufsitzmähers 1 gezeigt, der ein auf Vorder- beziehungsweise Hinterrädern 4, 3 abrollendes Fahrgestell 2 aufweist, wobei die Anordnung der Räder lediglich ein Beispiel darstellt.

Auf dem Fahrgestell 2 sind weiterhin ein Fahrersitz 8, Antriebseinrichtungen 5 und ein Grasfangbehälter 20 angeordnet. Zwischen den Vorder- und Hinterrädern ist ein Mähwerk 6 angeordnet, das mit auf dem Mähwerk zugeordneten Rädern 7 auf dem Boden abrollen und damit der Bodenkontur folgen kann.

Neben dem Fahrersitz 8 ist ein Betätigungshebel 9 angeordnet, der bei Auftreten von Verstopfungen eines zwischen dem Mähwerk 6 und dem Grasfangbehälter 20 angeordneten Auswurfkanals eine Öffnung des unteren Bereichs des Auswurfkanals ermöglicht, wie dies anhand der nachfolgenden Figuren noch näher erläutert wird.

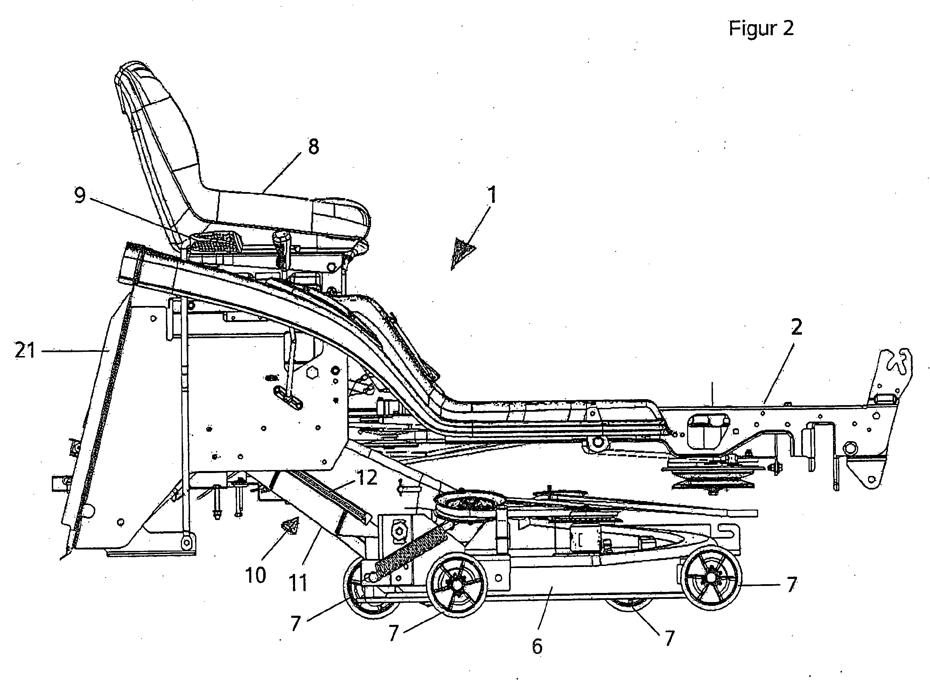

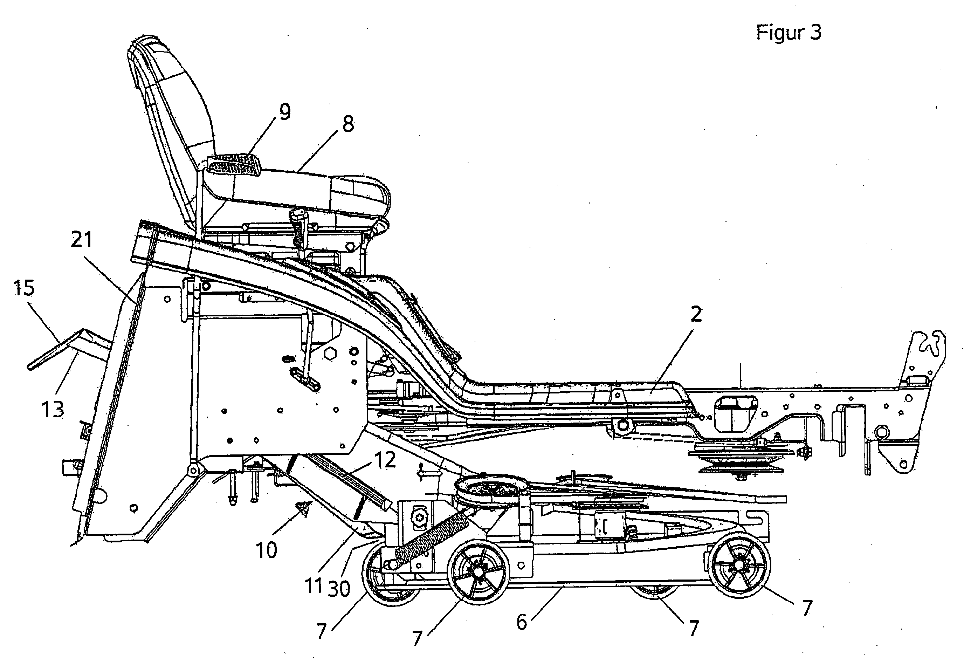

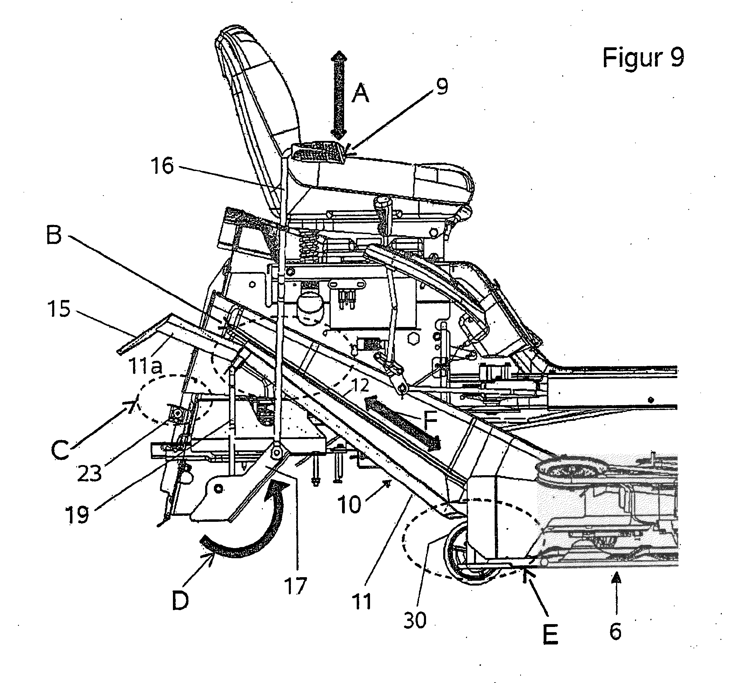

In den Figuren 2 und 3 ist eine weggebrochene Darstellung der in Figur 1 gezeigten Ausführungsform des Aufsitzmähers 1 gezeigt, wobei zur Erläuterung der Erfindung nicht wesentliche Teile fortgelassen wurden. In den Figuren 2 und 3 ist der bereits erwähnte Auswurfkanal 10 gezeigt, der sich zwischen einer nicht gezeigten Auswurföffnung des Mähwerks 6 und dem im Betrieb an einer Befestigungsplatte 21 befestigten Grasfangbehälter 20 nach Figur 1 erstreckt.
Der Auswurfkanal 10 ist in Längsrichtung in einen Oberteil 12 und einen Unterteil 11 unterteilt, wobei der Unterteil 11 gegenüber dem Oberteil 12 in Längsrichtung des Auswurfkanals 10 verschiebbar geführt ist, wie dies in Figur 9 durch den Doppelpfeil F angezeigt ist.

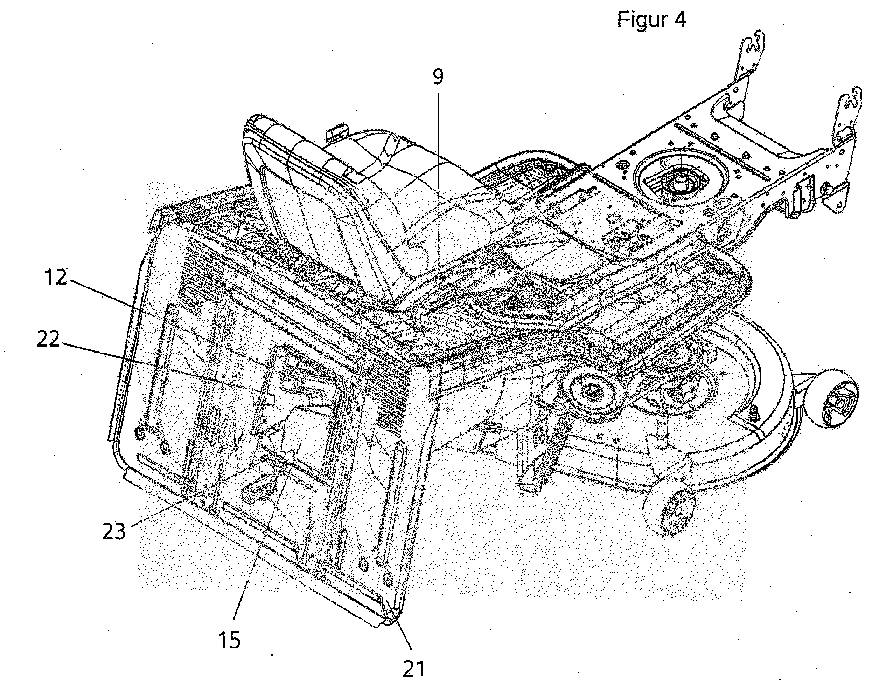

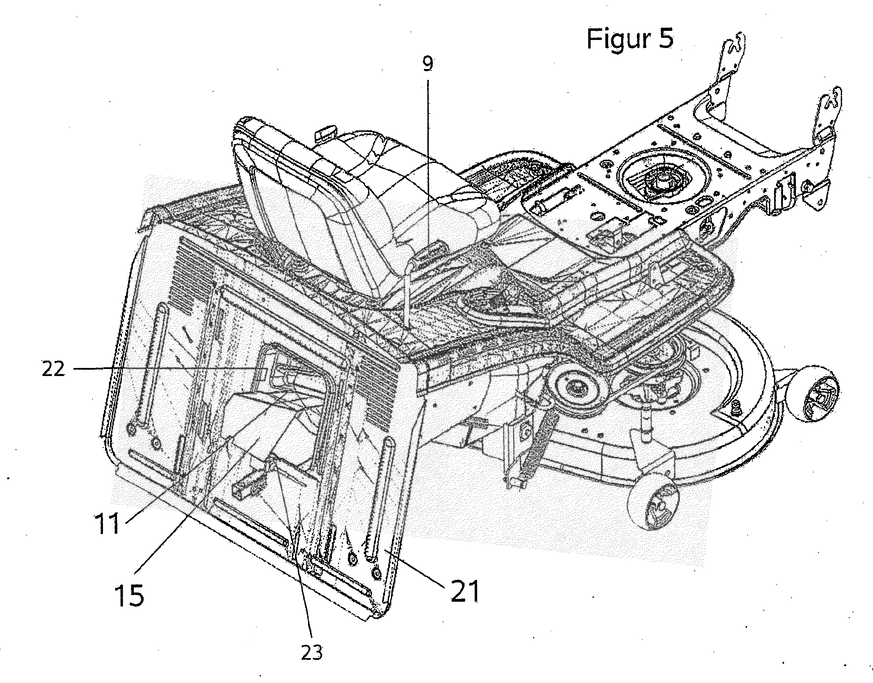

Durch Betätigung eines neben dem Fahrersitz 8 angeordneten Handgriffes 9 kann der Unterteil 11 gegenüber dem Oberteil 12 zwischen einer ersten Betriebsstellung, die in den Figuren 2 und 4 gezeigt ist und der normalen Arbeitsstellung entspricht, und einer zweiten Betriebsstellung verschoben werden, die in den Figuren 3 und 5 gezeigt ist und eine Reinigungsstellung darstellt.

Bei der Verschiebung in die zweite Betriebsstellung wird das hintere Ende des Unterteils teilweise in den Grasfangbehälter 20 verschoben, wobei in der insbesondere aus den Figuren 3 und 9 ersichtlichen Weise zwischen dem dem Mähwerk 6 benachbarten Ende des Unterteils 11 des Auswurfkanals 10 und einer Auswurföffnung des Mähwerks Öffnung 30 freigegeben wird, die in der ersten Betriebsstellung des Aufsitzmähers 1 durch das vordere Ende des Unterteils 11 des Auswurfkanals 10 verschlossen ist.

Bei dieser Verschiebung des Unterteils 11 des Auswurfkanals bewegt sich dessen hinteres Ende durch eine Öffnung 22 in der Befestigungsplatte 21 in den Grasfangbehälter 20, wie dies insbesondere aus den Figuren 3 und 5 zu erkennen ist. Hierbei ist weiterhin zu erkennen, dass eine Bodenwand 13 des Unterteils 11 des Auswurfkanals an ihrem in dem Grasfangbehälter befindlichen Ende durch eine schräg nach unten verlaufende Verschlussplatte 15 verlängert ist, die die aus den Figuren 4 und 5 ersichtliche Öffnung 22 der Befestigungsplatte 21 für den Grasfangbehälter in deren unteren Bereich verschließt, der unterhalb der Mündung des Auswurfkanals 10 liegt.

Wie dies aus einem Vergleich der Figuren 4 und 5 zu erkennen ist, wird dieser untere Bereich der Öffnung 22 bei der Verschiebung des Unterteils des Auswurfkanals 10 von der Verschlussplatte 15 freigegeben, wobei gleichzeitig in dem Grasfangbehälter befindliches Material durch die Verschlussplatte 15 zusammengedrückt und von der Öffnung 22 fort geschoben wird.

An der Unterkante der Öffnung 22 kann ein Füllstandssensor 23 für den Füllstand des Mähguts in dem Grasfangbehälter 20 vorgesehen sein, wobei die Unterkante der Verschlussplatte 15 in vorteilhafter Weise bei der Bewegung des Unterteils 11 des Auswurfkanals in den Grasfangbehälter hinein über die Oberkante des Füllstandssensors 23 streift und diesen von eventuell anhaftenden Mähgut-Resten befreit.

Wie dies bereits anhand der Figur 1 erläutert wurde, erfolgt die Betätigung der Verschiebung des Unterteils 11 des Auswurfkanals durch einen neben dem Fahrersitz 8 angeordneten Betätigungshebel 9, der herausgezogen und eingeschoben werden kann, wie dies noch näher erläutert wird, so dass der Fahrer eventuell aufgetretene Verstopfungen beseitigen kann, ohne den Fahrersitz 8 zu verlassen.

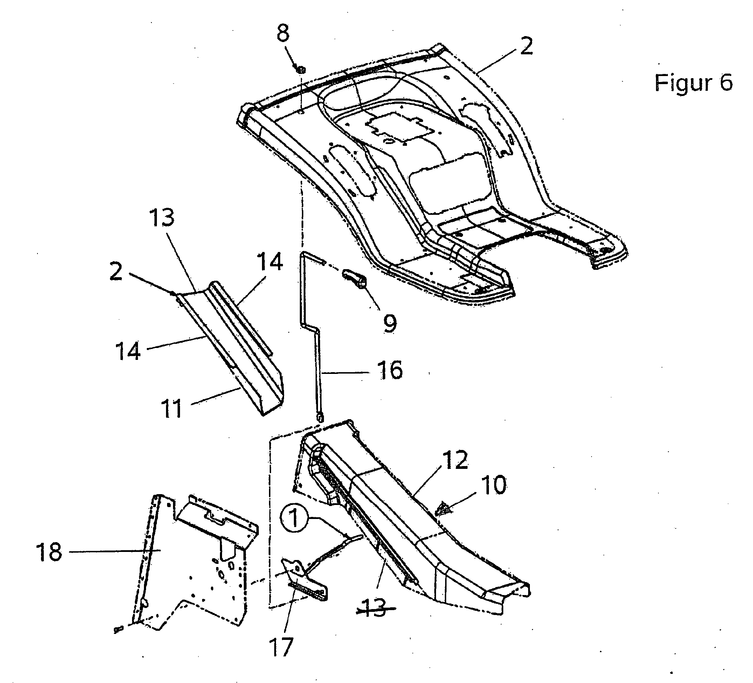

In Figur 6 sind weitere Einzelheiten des Auswurfkanals in Verbindung mit einem Teil des Fahrgestells 2 gezeigt.

Wie dies aus Figur 6 zu erkennen ist, kann der Oberteil 12 des Auswurfkanals 10 Führungseinrichtungen, beispielsweise Führungsnuten zur Führung des Unterteils 11 des Auswurfkanals aufweisen, der zu diesem Zweck mit sich radial nach außen erstreckenden Flanschen 14 versehen sein kann, wobei die so gebildeten Führungseinrichtungen sich im Wesentlichen in Längsrichtung des Auswurfkanals 10 erstrecken. Der Unterteil 11 weist die Bodenwand 13 auf, die in der insbesondere aus den Figuren 2 bis 5 ersichtlichen Weise durch die Verschlussplatte 15 nach unten hin verlängert ist.

Der in Figur 6 gezeigte Teil des Fahrgestells weist eine Führungshülse 8 für den Durchgang einer Betätigungsstange 16 auf, die an ihrem oberhalb des Fahrgestells liegenden Ende in dem Betätigungsgriff 9 endet. Diese Betätigungsstange 16 betätigt einen an einer Halterung 18 befestigten Winkelhebel, der über ein Gestänge 19 mit dem Unterteil 11 des Auswurfkanals verbunden ist, um diesen in Längsrichtung des Auswurfkanals 10 gegenüber dem Oberteil 12 des Auswurfkanals zu verschieben. Die Halterung 18 kann an dem Fahrgestell 2 befestigt sein

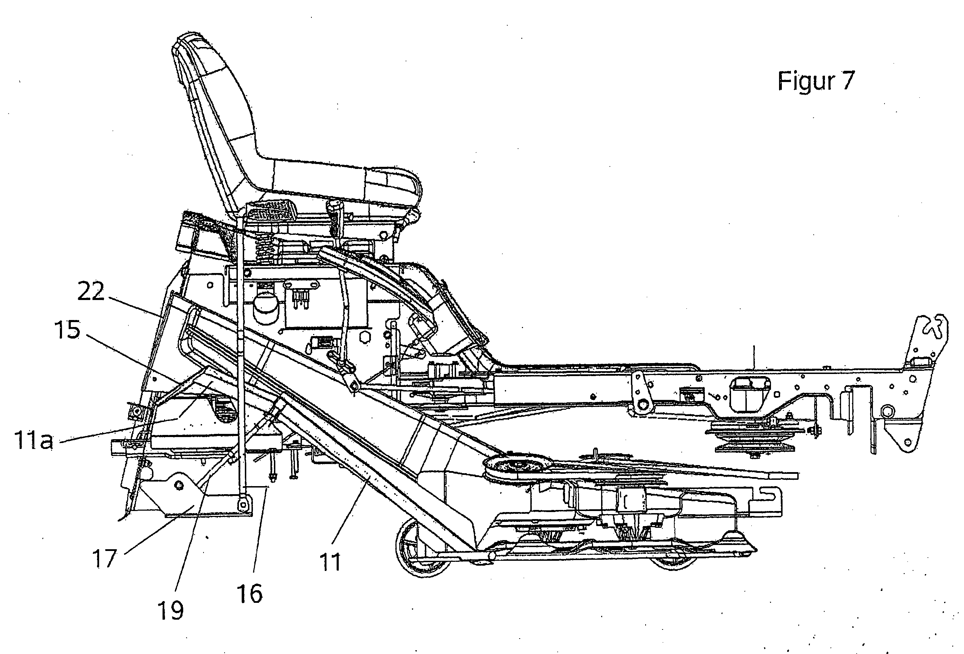

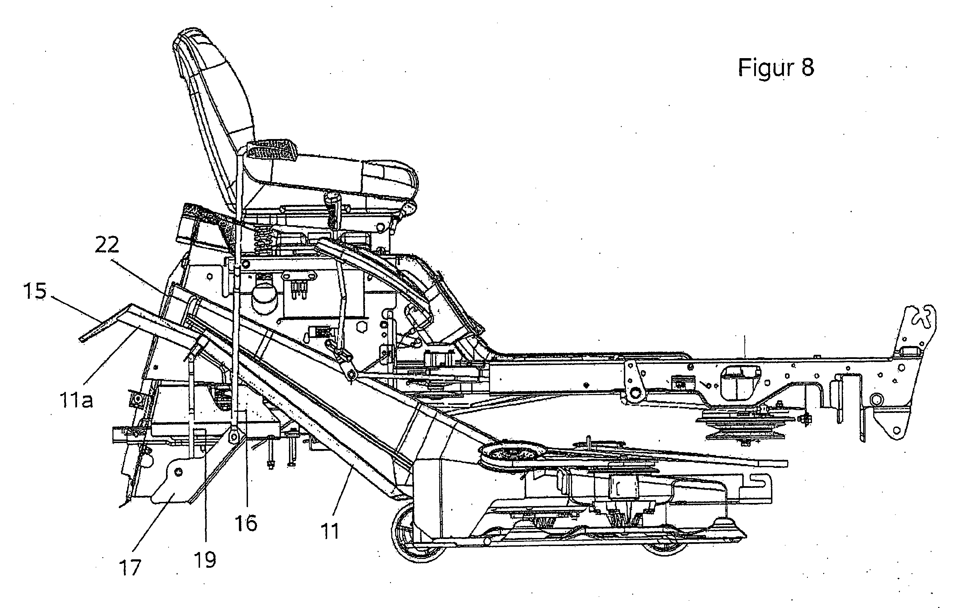

Diese Betätigung wird insbesondere aus einem Vergleich der Figuren 7 und 8 ersichtlich, in der die Betätigungsstange 16, der Winkelhebel 17 und das Gestänge 19 an dem Unterteil 11 des Auswurfkanals nochmals dargestellt sind. Die Art der Betätigung ist weiterhin aus Figur 9 zu erkennen, obwohl für die Art der Betätigung der Verschiebebewegung des Unterteils 11 gegenüber dem Oberteil 12 auch andere Einrichtungen vorgesehen sein können.

Aus den Figuren 7 und 8 ist weiterhin eine bevorzugte Ausführungsform der Form des Unterteils 11 zu erkennen, dessen Bodenwand einen leicht nach unten abgebogenen Endteil 11a in einem Bereich benachbart zu dem Grasfangbehälter 20 beziehungsweise der Verschlussplatte 15 aufweist.

Die Wirkung dieses abgebogenen Teils 11a wird insbesondere aus Figur 9 verständlich.

Der Auswurfkanal 10 verjüngt sich ausgehend von dem Mähwerk 6 in Richtung auf den Grasfangbehälter 20, wie dies beispielsweise aus den Figuren 7 und 8 erkennbar ist. Durch die abgebogene Form der Bodenwand 13 des Unterteils 11 erfolgt bei einer Verschiebung des Unterteils 11 in Richtung auf den Grasfangbehälter 20 zur Beseitigung von Verstopfungen durch diese Form der Bodenwand des Unterteils 11 zunächst eine Komprimierung von in dem Auswurfkanal 10 befindlichen Mähgutes, während, wenn der Unterteil 11 in seine Ausgangsstellung zurückkehrt, er dieses komprimierte Mähgut mit zurück in Richtung auf das Mähwerk bewegt, dessen Luftstrom dann gegebenenfalls Material, das nicht aus der durch die Verschiebung des Unterteils 11 gebildeten Öffnung 30 des Auswurfkanals 10 heraus gefallen ist, durch den nunmehr wieder erweiterten Auswurfkanal heraus blasen kann.

Wie dies aus Figur 9 zu erkennen ist, kann der Betätigungshebel 9 sehr einfach vom Fahrersitz 8 aus in Richtung des Doppelpfeils A betätigt werden, und dieser Betätigungshebel 9 ist über eine Betätigungsstange 16 mit dem Winkelhebel 17 verbunden, der bei einem Hochziehen des Betätigungshebels 9 eine Verschwenkung des Winkelhebels 17 in Richtung des Pfeils D hervorruft. Über das Gestänge 19 wird hierbei beim Hochziehen des Betätigungshebels 9 der Unterteil 11 nach hinten hin in Richtung auf den Grasfangbehälter in die zweite Betriebsstellung verschoben. Beim Niederdrücken des Betätigungshebels 9 wird der Unterteil 11 nach vorne hin in Richtung auf das Mähwerk 6 in die erste Betriebsstellung zurückgeführt.

Wie dies bei C angedeutet ist, streift die Unterkante der Verschlussplatte 15 eventuell an der Oberseite des Füllstandssensors 23 anhaftendes Mähgut von diesem ab, so dass eine fehlerhafte Anzeige des Füllstandssensors 23 vermieden wird.

Wie dies weiterhin aus Figur 9 zu erkennen ist, ergibt sich bei der Verschiebung des Unterteils 11 eine große Öffnung 30 im Bereich E zwischen dem Mähwerk 6 und dem dem Mähwerk benachbarten Ende des Unterteils 11 des Auswurfkanals 10, so dass durch eine Hin- und Herbewegung des Betätigungshebels 9 bereits eine Reinigung erfolgen kann. Diese Reinigungswirkung kann durch die Betätigung des Mähwerks 6 zur Erzeugung eines Luftstroms unterstützt werden.

Weiterhin ist in Figur 9 der Bereich B zu erkennen, in dem das eine Verstopfung hervorrufende Mähgut in dem Auswurfkanal komprimiert wird.

## Patentansprüche

1. Aufsitzmäher mit einem Fahrgestell (2), das auf Rädern (3, 4) abrollt, mit einer Antriebseinrichtung (5), einem Mähwerk (6) und einem am Heck des Aufsitzmähers angeordneten Grasfangbehälter (20), der mit dem Mähwerk (6) über einen Auswurfkanal (10) verbunden ist, der eine durch eine Verschlusseinrichtung verschließbare Auswurföffnung für Verstopfungen aufweist,
**dadurch gekennzeichnet, dass** der Auswurfkanal (10) entlang seiner Längsrichtung geteilt ist und einen Oberteil (12) und einen Unterteil (11) umfasst, der gegenüber dem Oberteil (12) in Längsrichtung des Auswurfkanals (10) verschiebbar geführt ist derart, dass der Unterteil (11) zumindest teilweise in den Grasfangbehälter (20) verschiebbar ist, um die Unterseite des Auswurfkanals (10) in einem an das Mähwerk angrenzenden Bereich zu öffnen, und dass Betätigungseinrichtungen (9, 16, 17) zur Verschiebung des Unterteils (11) gegenüber dem Oberteil (12) des Auswurfkanals vorgesehen sind, die vom Fahrersitz (8) aus betätigbar sind.

2. Aufsitzmäher nach Anspruch 1, **dadurch gekennzeichnet, dass** der Oberteil (12) und der Unterteil (11) des Auswurfkanals (10) einen im Wesentlichen umgekehrt U-förmigen bzw. U-förmigen Querschnitt mit Seitenwänden aufweisen, die an ihren einander zugewandten Längskanten mit ineinander greifenden Führungseinrichtungen zur Führung des Unterteils (11) an dem Oberteil (12) versehen sind.

3. Aufsitzmäher nach Anspruch 2, **dadurch gekennzeichnet, dass** die Seitenwände des Oberteils (12) mit radial gerichteten Führungsnuten versehen sind, und dass die Seitenwände des Unterteils (11) mit in Querrichtung gerichteten Führungsflanschen (14) versehen sind, die ineinander greifen und zur Führung der axialen Verschiebung des Unterteils (11) gegenüber dem Oberteil (10) ausgebildet sind.

4. Aufsitzmäher nach Anspruch 2, **dadurch gekennzeichnet, dass** die Seitenwände des Oberteils (12) mit in Querrichtung gerichteten Flanschen (14) versehen sind, und dass die Seitenwände des Unterteils (11) mit radial gerichteten Führungsnuten versehen sind, die ineinander greifen und zur Führung der axialen Verschiebung des Unterteils (11) gegenüber dem Oberteil (10) ausgebildet sind.

5. Aufsitzmäher nach einem der Ansprüche 1 bis 4, **dadurch gekennzeichnet, dass** das Fahrgestell (2) an seinem hinteren Ende eine Befestigungsplatte (21) zur Befestigung des Grasfangbehälters (20) aufweist, dass die Befestigungsplatte eine Öffnung (22) aufweist, in deren oberen Bereich das von dem Mähwerk abgewandte hintere Ende des Auswurfkanals (10) mündet, dass der zumindest teilweise in den Grasfangbehälter (20) verschiebbare Unterteil (11) des Auswurfkanals eine Bodenwand (13) aufweist, die durch eine sich nach unten hin erstreckende Verschlussplatte (15) verlängert ist, dass die Verschlussplatte (15) im Betriebszustand des Aufsitzmähers (1) den unteren Bereich der Öffnung (22) verschließt und derart ausgebildet ist, dass sie bei einer Verschiebung des Unterteils (11) in den Grasfangbehälter (20) in dem Grasfangbehälter befindliches Material zurückdrückt und den unteren Teil der Öffnung (22) freigibt.

6. Aufsitzmäher nach einem der vorhergehenden Ansprüche, **dadurch gekennzeichnet, dass** im Bereich der Unterkante der Öffnung (22) der Befestigungsplatte (21) ein Füllstandssensor (23) für den Grasfangbehälter angeordnet ist, und dass die Oberseite des Füllstandssensors bei der Bewegung des Unterteils (11) des Auswurfkanals durch die Unterkante der Verschlussplatte (15) von daran anhaftenden Materialresten gereinigt wird.

7. Aufsitzmäher nach einem der vorhergehenden Ansprüche, **dadurch gekennzeichnet, dass** der Querschnitt des Auswurfkanals (10) vom Mähwerk (6) zum Grasfangbehälter (20) hin abnimmt.

8. Aufsitzmäher nach einem der Ansprüche 1 bis 7, **dadurch gekennzeichnet, dass** die Bodenwand (13) des Unterteils (11) des Auswurfkanals (10) in Richtung auf den Grasfangbehälter (20) einen nach unten hin abgebogenen Abschnitt (11a) aufweist, der ausgehend vom Mähwerk (6) zum Grasfangbehälter (20) hin zunächst eine Querschnittsverringerung und nachfolgend eine Querschnittserweiterung des Auswurfkanals (10) ergibt.

9. Aufsitzmäher nach einem der vorhergehenden Ansprüche, **dadurch gekennzeichnet, dass** das Mähwerk (6) mit Waschdüsen zur Reinigung des Mähwerks (6) und des Auswurfkanals (10) versehen ist.

## Claims

1. A lawn tractor comprising a chassis (2) supported on wheels (3, 4); a drive means (5); a mower unit (6) and a grass hopper (20) located at the rear end of the lawn tractor, that grass hopper being connected to the mower unit (6) by a discharge channel (10) which has a ejection opening adapted to be closed by closure means for cloggings,
**characterized in that** the ejection channel (10) is subdivides in longitudinal direction and comprises an upper portion (12) and a lower portion (11), said lower portion being slidably guided relative to the upper portion (12) in the longitudinal direction of the ejection channel (10), such that the lower portion (11) is adapted to be shifted at least partially into the grass hopper (20) to open the lower side of the ejection channel (10) in a region adjacent to the mower unit, and **in that** actuating means (9, 16, 17) are provided for shifting the lower portion (11) relative to the upper portion (12) of the ejection channel, said actuating means (9, 16, 17) being operable from the seat (8) of the driver.

2. Lawn tractor according to claim 1, **characterized in that** the upper portion (12) and the lower portion (11) of the ejection channel (10) comprise a substantially inverted U-shaped and U-shaped gross section, respectively, comprising side walls which are provided at their longitudinal edges directed to each other with mutually engaging guide means for guiding the lower portion (11) along the upper portion (12).

3. A lawn mower according to claim 2, **characterized in that** the side walls of the upper portion (12) are provided with radially directed guide grooves, and that the side walls of the lower portion (11) are provided with guide flanges (14) directed in transverse direction which engage each other and are configured for guiding the axial shifting of the lower portion (11) with respect to the upper portion (10).

4. A lawn mower according to claim 2, **characterized in that** the side walls (12) of the upper portion are provided with flanges (14) directed transversally, and **in that** the side walls of the lower portion (11) are provided with radially directed guide groove, said flanges and guide grooves being in engagement with one another and are configured for guiding the axial shifting of the lower portion (11) relative to the upper portion (10).

5. A lawn mower according to any of the claims 1 to 4, **characterized in that** the chassis (2) is provided at its rear end with a support plate (21) for supporting the grass hopper (20), **in that** the support plate is provided with an opening (22) having an upper region into which the rear end of the ejection channel (10) opposite to the mower unit leads, **in that** the lower portion (11) of the ejection channel which partially shiftable into the grass hopper (20) comprises a bottom wall (13) extended by a closure plate (15) extending downwardly, **in that** the closure plate (15) closes the lower portion of the opening (22) in the operating state of the lawn mower (1) and is configured such that on shifting the lower portion (11) into the grass hopper (20), material present in the grass hopper is pressed backwardly thereby clearing the lower portion of the opening (22).

6. A lawn tractor according to any of the preceding claims, **characterized in that** a filling level sensor (23) for the grass hopper is provided within the region of the lower edge of the opening (22) of the support plate (11), and **in that** the upper side of the filling level sensor is cleaned from residual material sticking thereto by the lower edge of the closure plate (15) on moving the lower portion (11) of the ejection channel.

7. A lawn tractor according to any of the preceding claims, **characterized in that** the cross section of the ejection channel (10) decreases in a direction from the mower unit (6) to the grass hopper (20).

8. A lawn tractor according to any of the claims 1 through 7, **characterized in that** the bottom wall (13) of the lower portion (11) of the ejection channel (10) is provided, in a direction to the grass hopper (20), with a section (11a) bent downwardly, said section acting to provide first a cross sectional reduction and subsequently a cross section extension of the ejection channel (10) in a direction from the mower unit (6) to the grass hopper (20).

9. A lawn tractor according to any of the preceding claims, **characterized in that** the mower unit (6) is provided with washing nozzles for cleaning the mower unit (6) and the ejection channel (10).

## Revendications

1. Tondeuse autoportée avec un châssis (2), qu roule sur des roues (3, 4) avec un système de propulsion (5), un ensemble de coupe (6) et un conteneur de réception d'herbe (20) disposé à l'arrière de la tondeuse autoportée , qui est relié à l'ensemble de coupe (6) par un conduit d'éjection (10), qui comporte une ouverture d'éjection pour les bourrages, pouvant être fermé avec un dispositif de fermeture
**caractérisé en ce que** le conduit d'éjection (10) est divisé le long de son axe longitudinal et comprend une partie supérieure (12) et une partie inférieure (11) qui peut être déplacé en face de la partie supérieure (12) dans le sens longitudinal du conduit d'éjection (10) de telle sorte que la partie inférieure (11) peut être déplacée au moins en partie dans le conteneur de réception d'herbe (20) pour ouvrir le côté inférieur du conduit d'éjection (10) dans une zone limitrophe de l'ensemble de coupe et **en ce que** des dispositifs de commande (9, 16, 17) sont prévus pour déplacer la partie inférieure (11) en face de la partie supérieure (12) du conduit d'éjection qui peuvent être actionnés depuis le siège du conducteur (8).

2. Tondeuse autoportée selon la revendication 1 **caractérisée en ce que** la partie supérieure (12) et la partie inférieure (11) du conduit d'éjection (10) présentent pour l'essentiel une section en forme de U de façon inversée ou en forme de U avec des parois latérales qui sont munies sur leurs bords longitudinaux tournés vers l'autre de dispositifs de guidage venant en prise l'un dans l'autre pour guider la partie inférieure (11) sur la partie supérieure (12).

3. Tondeuse autoportée selon la revendication 2 **caractérisée en ce que** les parois latérales de la partie supérieure (12) sont munies de rainures de guidage à orientation radiale et **en ce que** les parois latérales de la partie inférieure (11) sont munies de brides de guidage (14) orientées dans le sens transversal qui viennent en prise l'une dans l'autre et sont constitués pour guider le déplacement axial de la partie inférieure (11) en face de la partie supérieure (10).

4. Tondeuse autoportée selon la revendication 2 **caractérisée en ce que** les parois latérales de la partie supérieure (12) sont munies de brides (14) orientées dans le sens transversale et **en ce que** les parois latérales de la partie inférieure (11) sont munies de rainures de guidage orientées dans le sens radial qui viennent en prise l'une dans l'autre et sont constituées pour guider le déplacement de la partie inférieure (11) en face de la partie supérieure (10).

5. Tondeuse autoportée selon l'une quelconque des revendications 1 à 4 **caractérisée en ce que** le châssis (2) comporte à son extrémité arrière une plaque de fixation (21) pour fixer le conteneur de réception d'herbe (20), **en ce que** la plaque de fixation comporte une ouverture (22) dans la zone supérieure de laquelle débouche l'extrémité arrière du conduit d'éjection (10) opposée à l'ensemble de coupe, **en ce que** la partie inférieure (11) du conduit d'éjection pouvant être déplacé au moins en partie dans le conteneur de réception d'herbe (20) comporte une paroi de fond (13) qui est prolongée par une plaque de fermeture (15) s'étendant vers le bas, **en ce que** la plaque de fermeture (15) ferme à l'état de fonctionnement de la tondeuse autoportée (1) la zone inférieure de l'ouverture (22) et est constituée de telle sorte qu'elle refoule, lors d'un déplacement de la partie inférieure (11) dans le conteneur de réception d'herbe (20), le matériau se trouvant dans le conteneur de réception d'herbe et libère la partie inférieure de l'ouverture (22).

6. Tondeuse autoportée selon l'une quelconque des revendications précédentes **caractérisée en ce que** dans la zone du bord inférieur de l'ouverture (22) de la plaque de fixation (21) est disposé un capteur de niveau de remplissage (23) pour le conteneur de réception d'herbe et **en ce que** le côté supérieur du capteur de niveau de remplissage est, lors du mouvement de la partie inférieure (11) du conduit d'éjection, nettoyé des restes de matériau y adhérant, par le bord inférieur de la plaque de fermeture (15).

7. Tondeuse autoportée selon l'une quelconque des revendications précédentes **caractérisée en ce que** la section du conduit d'éjection (10) se sépare de l'ensemble de coupe (6) vers le conteneur de réception d'herbe (20).

8. Tondeuse autoportée selon l'une quelconque des revendications 1 à 7 **caractérisée en ce que** la paroi de fond (13) de la partie inférieure (11) du conduit d'éjection (10) comporte en direction du conteneur de réception d'herbe (20) un tronçon (11a) plié vers le bas qui en partant de l'ensemble de coupe (6) vers le conteneur de réception d'herbe (20) résulte d'abord en une réduction de la section transversale et ensuite en un élargissement de la section transversale du conduit d'éjection (10).

9. Tondeuse autoportée selon l'une quelconque des revendications précédentes **caractérisée en ce que** l'ensemble de coupe (6) est muni de buses d'arrosage pour nettoyer l'ensemble de coupe (6) et le conduit d'éjection (10).
